# EUROPÄISCHE PATENTSCHRIFT

(11) **EP 2 122 138 B1**
(45) Veröffentlichungstag und Bekanntmachung des Hinweises auf die Patenterteilung: **23.04.2014**
(21) Anmeldenummer: 08717418.1
(22) Anmeldetag: 05.03.2008
(51) Int. Cl.: F02B 77/13, F02F 7/00, G10K 11/162, F16F 15/02, F16F 7/01, F16M 1/00

(54) **GUSSGEHÄUSE**
CAST HOUSING
CARTER COULÉ

(30) Priorität: 21.03.2007 DE 102007013494
(43) Veröffentlichungstag der Anmeldung: 25.11.2009
(73) Patentinhaber: ZF Friedrichshafen AG, 88038 Friedrichshafen (DE)
(72) Erfinder: MÜLLER, Walter, 88046 Friedrichshafen (DE); VÖHRINGER, Tobias, 88074 Meckenbeuren (DE)
(86) Internationale Anmeldenummer: PCT/EP2008/052668
(87) Internationale Veröffentlichungsnummer: WO 2008/113687

(56) Entgegenhaltungen:
- EP-A- 0 547 731
- EP-A- 1 498 598
- WO-A-03/019036
- DE-A1- 2 739 074
- DE-A1- 3 133 844
- DE-A1- 10 034 301
- DE-A1- 19 749 037
- DE-C1- 3 905 562
- GB-A- 2 336 238
- JP-A- 10 071 459
- JP-A- 55 112 840
- JP-A- 60 157 542
- JP-A- 60 173 321

## Beschreibung

Die Erfindung betrifft ein schallgedämpftes Gussgehäuse für Geräusch erzeugende Maschinen, insbesondere Antriebe und Getriebe, umfassend ein Gussgehäuse mit mindestens einem Einlegeteil zur Verbesserung der akustischen Eigenschaften des Gehäuses.

Schwingungen von flächenhaften Gebilden, z. B. von Maschinenteilen wie Gehäusewänden, sind in der Regel unerwünscht, weil sie oft zur Schallabstrahlung und damit zu lästigem Lärm führen, was besonders in einem Kraftfahrzeug für Personaltransport zur Reduzierung des Fahrkomforts führen kann. Des Weiteren kann manchmal die Funktionsfähigkeit der Maschine von den Schwingungen beeinträchtigt werden, indem sie z. B. die Bearbeitungsgenauigkeit von Werkzeugmaschinen vermindern oder weil sie in Extremfällen durch Materialermüdung zu Maschinenschäden führen. Als Gegenmaßnahme versucht man, diese Schwingungen zu dämpfen. Hierzu werden z. B. ein- oder mehrschichtige schwingungsdämpfende Schichten auf dem Gehäuse der Maschine angebracht. Insbesondere dann, wenn Auftragsdicke oder Gewicht dieser dämpfenden Schichten durch die besonderen Bedingungen der Anwendungen begrenzt sind, bleibt die Wirksamkeit dieser Schichten oft erheblich unter dem zurück, was wünschenswert wäre. Die Schichten werden während der Montage der Maschine auf dem Gehäuse festgeklebt, was in einer Serienproduktion zu einem unerwünschten zusätzlichen Prozessschritt führt. Des Weiteren besteht immer das Risiko, dass der Klebverband durch die oft aggressiven Umgebungen, in welchen die Maschinen arbeiten, ganz oder teilweise aufgelöst wird und die Schichten fangen an zu klappern oder fallen ganz weg.

Um dünnere Gehäusewände zu versteifen werden sie mit Rippen versehen, wobei Wasser und Schmutz sich zwischen den Rippen sammelt und zu einer erhöhten Korrosion des Gehäuses führt.

In DE 100 34 301 C2 wird ein schallgedämpftes Gehäuse für Geräusch erzeugende Maschinen vorgeschlagen. Das Gehäuse hat eine Metall- und eine Kunststoffkomponente und zeichnet sich dadurch aus, dass die Metallkomponente ein geschäumtes Leichtmetall ist, insbesondere ein Aluminiumschaumkörper, und dass die Kunststoffkomponente eine Beschichtung der Metallkomponente bildet, so dass die Wand des Gehäuses eine Sandwichstruktur aus Leichtmetallschaum und Kunststoff darstellt. Eine solche Lösung würde zwar gute schalldämpfende Eigenschaften aufweisen, aber sie weist für viele Anwendungen zu schwache Steifigkeitseigenschaften auf, da nur geringe Momente auf einer solchen Konstruktion abgestützt werden können.

Aus der EP-A-0 547 731 schließlich ist ein Gussbauteil bekannt, wobei im Guss mindestens ein Einlegeteil eingegossen ist, welches als Verstimmanordnung beziehungsweise Dämpfungsanordnung wirkt, um die Resonanzfrequenz des Bauteils weg von einem Frequenzbereich innerhalb der Betriebsfrequenzen der Maschine zu führen und/oder eine vibrationsdämpfende Wirkung darzustellen.

Die Aufgabe der Erfindung besteht darin, die akustischen Eigenschaften eines Gussgehäuses für Geräusch erzeugende Maschinen zu verbessern.

Die Lösung dieser Aufgabe ergibt sich aus den Merkmalen des Hauptanspruchs, während vorteilhafte Ausgestaltungen und Weiterbildungen der Erfindung aus den Unteransprüchen entnehmbar sind.

Um die akustischen Eigenschaften eines Gussgehäuses zu verbessern kann die Resonanzfrequenz des Gehäuses beziehungsweise die Resonanzflächen des Gehäuses durch eine Verstimmung verschoben werden oder die im Gehäuse eingeführten Schwingungen kann gedämpft werden, wobei eine Kombination von einer Verstimmung und einer Dämpfung auch möglich ist. Ein Gehäuse kann eine oder mehrere Resonanzfrequenzen aufweisen, welche an eine oder mehreren Resonanzflächen des Gehäuses verteilt sind. Die Anzahl der Resonanzfrequenzen und/oder Resonanzflächen sind von der Konstruktion des Gehäuses abhängig und variiert von Gehäuse zu Gehäuse. Da die Resonanzfrequenzen und die Resonanzflächen an einem Gehäuse berechnet werden können, ist es möglich, zielgerichtete Maßnahmen im Gehäuse durchzuführen. Um das Gehäuse zu verstimmen beziehungsweise die Vibrationen des Gehäuses zu dämpfen, wird erfindungsgemäß im Gießverfahren mindestens ein Einlegeteil im Gehäuse eingegossen. Das Einlegeteil wird entweder ganz oder teilweise eingegossen, wobei das Einlegeteil so eingegossen wird, dass eine Wärmeausdehnung des Einlegeteils möglich ist.

Die Einlegeteile vermeiden zusätzlich die bei dicken, gegossenen Wänden durch die Schwindung entstehende Lunkerbildung.

Die erfindungsgemäße Ausführung des Einlegeteils ist als Tasche im gleichen Material wie der Guss vorgesehen. Da die Tasche aus dem gleichen Material wie der Guss besteht, entstehen keine Probleme mit unterschiedlicher Wärmeausdehnung. Eine bevorzugte Tasche ist aus einem Blech hergestellt und durch Bördelung und/oder Schweißen zusammengehalten. Des Weiteren ist die Tasche mit einem Füllstoff gefüllt, welcher Schwingungen dämpft. Der Füllstoff ist vorteilhafterweise eine inhomogene Mischung von ein oder mehreren Materialen, welche die Schwingungen in dem entsprechenden Wandbereich dämpft. Die Dämpfung kommt dadurch zustande, dass die Schwingungen des Gehäuses in der Tasche weitergeleitet werden und bei den dabei stattfindenden Reibungen zwischen den Körpern des Füllmaterials wird die Schwingungsenergie in Wärmeenergie umgewandelt. Ein bevorzugter Füllstoff des Einlegeteils sind Stahlkugeln gemischt mit Sinterpulver. Ein solcher Füllstoff würde ein Recycling des Gehäuses vereinfachen, da der Guss und der Füllstoff bei einem Recycling in einer Legierung zusammen geschmolzen werden können. Außer der schwingungsdämpfenden Eigenschaften wird auch die Resonanzfrequenz durch Gewichtsveränderung des Wandbereiches verändert.

Weitere Vorteile der Erfindung ergeben sich aus dem unter Bezugnahme auf die Zeichnungen prinzipmäßig beschriebenen Ausführungsbeispiel. Es zeigen:
- Fig. 1: ein Gehäuse mit einem Einlegeteil;
- Fig. 2: eine nicht zur Erfindung gehörende homogene Stahlplatte als Einlegeteil;
- Fig. 3: ein nicht zur Erfindung gehörendes gewelltes Blech als Einlegeteil;
- Fig. 4: eine gefüllte Blechtasche als Einlegeteil und
- Fig. 5: ein nicht zur Erfindung gehörender Metallschaum als Ein legeteil.

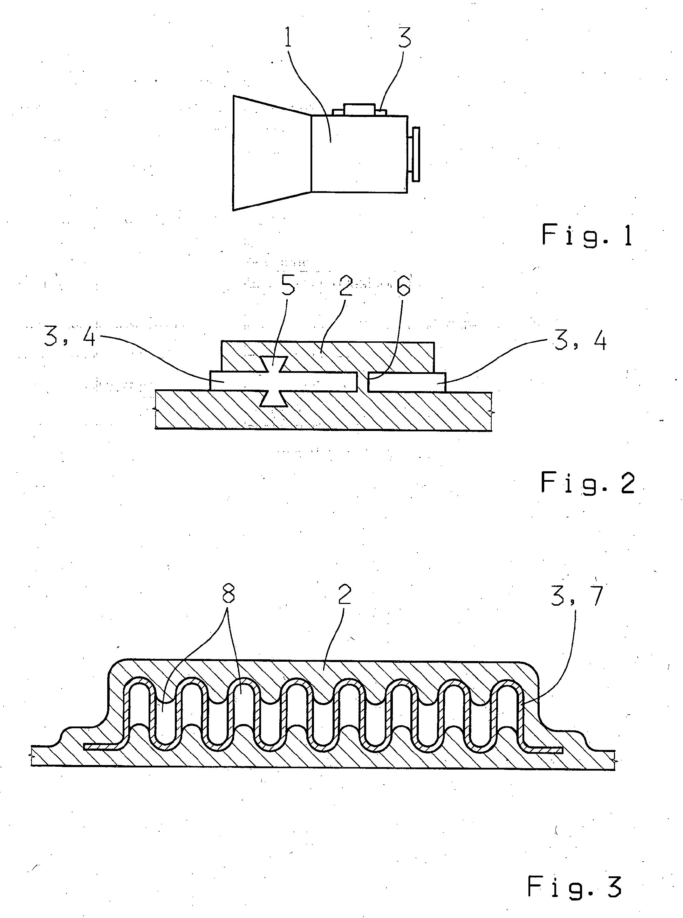

Fig. 1 zeigt ein Gehäuse 1, in dem ein Einlegeteil 3 zur Verbesserung der akustischen Eigenschaften des Gehäuses 1 im Guss eingegossen ist. Das Einlegeteil 3 wird in einem oder mehreren Wandbereichen eingegossen, wobei im Voraus berechnet wird, in welcher Wand das Einlegeteil 3 eingegossen wird und welche Größe das Einlegeteil 3 braucht. Das Einlegeteil 3 dämpft die Schwingungen des Wandbereiches und verschiebt die Resonanzfrequenz des Wandbereiches.

Fig. 2 zeigt eine homogene Stahlplatte 4, welche als Einlegeteil 3 im Guss 2 eines Gehäuses eingegossen ist, um das akustische Verhalten des Gehäuses zu verbessern. Der Guss 2 ist aus einem anderen Material als die Stahlplatte 4, beispielsweise ein Leichtmetall, was zu unterschiedlichen Wärmeausdehnungen der Materialien führt. Die Stahlplatte 4 weist in dieser Ausführung zwei Nasen 5 und eine Ausnehmung 6 auf, welche die Stahlplatte 4 im Guss 2 festhalten. Dadurch, dass die Enden der Stahlplatte 4 nicht vom Guss 2 umgeschlossen sind, wird eine Längenausdehnung der Stahlplatte 4 ermöglicht, wobei die Breite und die Dicke der Stahlplatte 4 so ausgelegt ist, dass durch die unterschiedliche Wärmeausdehnung keine Überdehnung der Materialien entsteht, weder bei Kälte noch bei Wärme. Alternativ können statt der Stahlplatte 4 ein oder mehreren Materialen benutzt werden, beispielsweise eine Platte aus einem Kompositmaterial.

Fig. 3 zeigt ein gewelltes Blech 7, welches aus einem anderen Material als der Guss 2 ist und dadurch auch eine unterschiedliche Wärmeausdehnung als der Guss 2 aufweist. Das Blech 7 ist als Einlegeteil 3 im Guss 2 eines Gehäuses eingegossen, um das akustische Verhalten des Gehäuses zu verbessern. Das Blech 7 ist so eingegossen, dass in den Wellenbäuchen und den Wellenbergen des gewellten Bleches 7 Hohlräume 8 vorhanden sind. Die Hohlräume 8 zusammen mit der gewellten Form ermöglichen eine Wärmeausdehnung des Bleches 7 in den Hohlräumen 8, wobei die Breite und die Dicke des Bleches 7 sowie die Anzahl und die Größe der Wellen so ausgelegt ist, dass durch die unterschiedliche Wärmeausdehnung keine Überdehnung der Materialien entstehen.

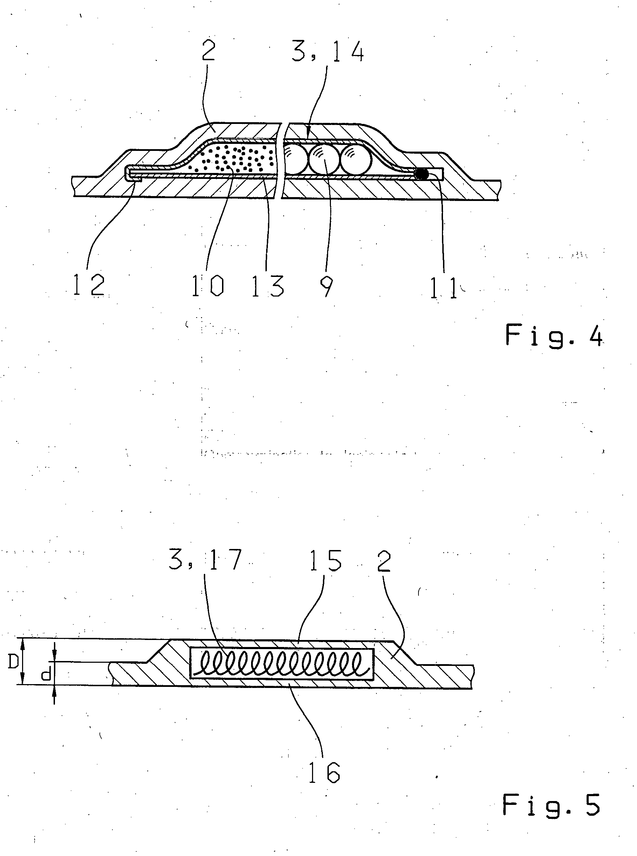

Fig. 4 zeigt eine Tasche 14, welche als Einlegeteil 3 im Guss 2 eines Gehäuses eingegossen ist. Die Tasche 14 ist aus einem Blech 13 aus dem gleichen Material wie der Guss 2 hergestellt und ist durch einen Schweißverband 11 und/oder Bördelung 12 zusämmengehalten. Stahlkugeln 9 und Sinterpulver 10 sind als Füllstoff in der Tasche 14 vorhanden. Die Stahlkugeln 9 können, wie in Fig. 4, die gleiche Größe haben oder unterschiedlich groß sein. Des Weiteren werden die Stahlkugeln 9 und das Sinterpulver 10 dicht in der Tasche 14 gepackt. Schwingungen des Gehäuses werden in der Tasche 14 weitergeleitet und bei den dabei stattfindenden Reibungen zwischen den Bestandteilen des Füllstoffs (Stahlkugeln 9 und Sinterpulver 10) wird die Schwingungsenergie in Wärmeenergie umgewandelt. Die Mischung aus Stahlkugeln 9 und Sinterpulver 10 ist eine vorteilhafte Ausführung wegen der guten Recycling-Möglichkeiten und einfachen Einlegens beim Gießprozeß, aber auch andere inhomogene Mischungen sind vorstellbar.

Fig. 5 zeigt einen Metallschaum 17, welcher als Einlegeteil 3 im Guss 2 eines Gehäuses eingegossen ist. Der Metallschaum 17 wird vollständig im Guss 2 eingegossen, so dass der Metallschaum zwischen einer Innen- und einer Außenwand 16, 15 des Gehäuses angeordnet ist. Durch den Metallschaum 17 kann eine erhöhte Wanddicke D gegenüber die normale Wanddicke d vorgesehen werden, was zu einer erhöhten Steifigkeit des Wandbereichs führt.

### Bezugszeichen

- 1: Gehäuse
- 2: Guss
- 3: Einlegeteil
- 4: Stahlplatte
- 5: Nasen
- 6: Ausnehmung
- 7: gewelltes Blech
- 8: Hohlraum
- 9: Stahlkugel
- 10: Sinterpulver
- 11: Schweißverband
- 12: Bördelung
- 13: Blech
- 14: Tasche
- 15: Außenwand
- 16: Innenwand
- 17: Metallschaum

- D: verstärkte Dicke
- d: normale Dicke

## Patentansprüche

1. Gussgehäuse für Geräusch erzeugende Maschinen, insbesondere Antriebe und Getriebe, wobei im Guss (2) mindestens ein Einlegeteil (3) eingegossen ist, welches als Verstimmanordnung beziehungsweise Dämpfanordnung wirkt, um die Resonanzfrequenz des Gehäuses (1) weg von einem Frequenzbereich innerhalb der Betriebsfrequenzen der Maschine zu führen und eine vibrationsdämpfende Wirkung darzustellen, **dadurch gekennzeichnet, dass** das Einlegeteil (3) aus einer Tasche (14) im gleichen Material wie der Guss (2) besteht, wobei die Tasche (14) mit einem Füllstoff gefüllt ist, welcher Schwingungen dämpft, und der Füllstoff so gewählt ist, dass er zusammen mit dem Guss in einer Legierung geschmolzen werden kann.

2. Gussgehäuse nach Anspruch 1, **dadurch gekennzeichnet, dass** der Füllstoff eine inhomogene Mischung aus verschiedenen Materialen ist.

3. Gussgehäuse nach Anspruch 1 oder 2, **dadurch gekennzeich-n et** , dass der Füllstoff aus Stahlkugeln (9) und Sinterpulver (10) besteht.

## Claims

1. Cast housing for noise-producing machines, in particular drives and gearboxes, at least one insert part (3) being cast in the casting (2), acting as a tuning arrangement or damping arrangement in order to lead the resonant frequency of the housing (1) away from a frequency range within the operating frequencies of the machine and to represent a vibration-damping effect, **characterized in that** the insert part (3) comprises a pocket (14) in the same material as the casting (2), the pocket (14) being filled with a filler, which damps vibrations, and the filler being chosen such that, together with the casting, it can be smelted in an alloy.

2. Cast housing according to Claim 1, **characterized in that** the filler is a non-homogenous mixture of various materials.

3. Cast housing according to Claim 1 or 2, **characterized in that** the filler is composed of steel balls (9) and sinter powder (10).

## Revendications

1. Carter coulé pour des machines générant du bruit, notamment des entraînements et des transmissions, au moins une pièce d'insertion (3) étant coulée dans la masse de coulée (2), laquelle agit en tant qu'agencement à désaccorder ou qu'agencement d'amortissement afin d'amener la fréquence de résonance du carter (1) à l'écart d'une plage de fréquences à l'intérieur des fréquences de fonctionnement de la machine et de produire un effet amortissant les vibrations, **caractérisé en ce que** la pièce d'insertion (3) se compose d'une poche (14) en le même matériau que la masse de coulée (2), la poche (14) étant remplie d'une charge qui amortit les vibrations et la charge étant choisie de telle sorte qu'elle puisse être fusionnée à la masse de coulée en un alliage.

2. Carter coulé selon la revendication 1, **caractérisé en ce que** la charge est un mélange non homogène de divers matériaux.

3. Carter coulé selon la revendication 1 ou 2, **caractérisé en ce que** la charge se compose de billes d'acier (9) et de poudre de frittage (10).
